# EUROPEAN PATENT APPLICATION

(11) **EP 4 531 363 A1**
(43) Date of publication of application: **02.04.2025**
(21) Application number: 24190416.8
(22) Date of filing: 23.07.2024
(51) Int. Cl.: H04L 43/026, H04L 43/0852, H04L 43/55, H04L 43/50, H04L 47/122, H04L 47/2441, H04L 47/2425, H04L 43/0829

(54) **QUALITY-OF-SERVICE NETWORK FLOW CONTROL**

(30) Priority: 29.09.2023 US 202318375036
(71) Applicant: Intel Corporation, Santa Clara, CA 95054 (US)
(72) Inventor: ZHANG, Menglei, Portland, OR, 97205 (US); ZHU, Jing, Portland, OR, 97229 (US)
(74) Representative: Maiwald GmbH

(57) **Abstract**

Quality of Service (QoS) network flow control may be accomplished through several systems and techniques. A device, when transmitting traffic over a first link, may copy that traffic to a second link to test the conformance with QoS requirements of the second link. After receiving in-band telemetry of the copied traffic on the second link that indicates that the second link meets the QoS requirements of the traffic, at least part of the traffic is transmitted by the second link.

## Description

### BACKGROUND

Computer networking may involve many different connections (e.g., links, paths or access) to any given device (e.g., node) in a network. There are a variety of mechanisms by which a given link may be selected for traffic to or from a node. Multi-Access Management Services (MAMS) is a programmable framework that provides mechanisms for the flexible selection of network links in multi-connection communication environments that are based on application needs. MAMS leverages network intelligence or policies to dynamically adapt traffic distribution across selected links and user plane treatment to changing network or link conditions. Network link selection or configuration messages may be carried as user plane data between the functional elements in the network and the end-user device. Thus, the messages do not impact control plane signaling techniques of the individual access network.

In the context of computer networking, Quality-of-Service (QoS) denotes a mechanism by which data traffic is managed and prioritized to ensure performance, reliability, and predictability. QoS encompasses processes such as classification, wherein data packets are identified based on attributes, and marking, where packets are modified to signify their priority. The primary objective of QoS is to ensure that applications receive the bandwidth and experience latency commensurate with the importance of the application. QoS helps to ensure consistent and efficient network operation.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a block diagram of an example of an environment including a system for QoS network flow control, according to an embodiment.
FIG. 2 illustrates an example of state transitions for multi-access traffic steering, according to an embodiment.
FIG. 3 illustrates an example testing and monitoring timeline, according to an embodiment.
FIG. 4 illustrates an example of control flow for testing and monitoring, according to an embodiment.
FIG. 5 illustrates an example of a control flow for testing and monitoring, according to an embodiment.
FIG. 6 illustrates an example of intra-class flow prioritization, according to an embodiment.
FIG. 7 illustrates an example of a control flow for dynamic flow prioritization (DFP), according to an embodiment.
FIG. 8 illustrates an example of intra-class flow prioritization, according to an embodiment.
FIG. 9 illustrates a flow diagram of an example of a method for QoS network flow control, according to an embodiment.
FIG. 10 is a block diagram illustrating an example of a machine upon which one or more embodiments may be implemented.

### DETAILED DESCRIPTION

Given multi-access networking environments-in which a network device has multiple links by which to route traffic-a question may arise as to which of multiple links can or should be used to carry traffic. Moreover, for a given link, a question may arise to how to optimize traffic flow. Quality-of-Service (QoS) is a component of these questions. For the first question, whether a newly available link meets QoS requirements for a traffic flow may be dispositive to the use of the new link. For the second question, consider link performance degradation. If the degraded link performance does not enable QoS requirements to bet met for all aspects of the traffic flow, there may be a way to manage the traffic flow to achieve acceptable QoS compliance.

Consider a MAMS server that runs on a network edge and delivers traffic over multiple links-such as Wi-Fi, cellular, satellite, etc. A Generic Multi-Access (GMA) convergence protocol may be used to support multi-path management by adding additional control information into packets (e.g., Internet Protocol (IP) packets) for multi-path management. MAMS may improve user experience-such as by delivering higher throughput, lower latency, or higher reliability-by intelligently splitting, steering, or duplicating traffic over multiple connections.

An existing issue lies in the accurate measure of QoS metrics on a given link, including identifying of QoS violations. To address this issue, a control technique that duplicates traffic over a new link is used to obtain realistic QoS telemetry for the new link. In an example, a Finite-State-Machine (FSM) based control technique may be used. The FSM may include four states and transitioning conditions for QoS-aware multi-access traffic steering. The techniques enable determinations to be made as to whether a given QoS requirement is satisfied by the new link as well as detecting QoS violations during the data transmission. In an example, the techniques use in-band telemetry using data packets from the traffic flow to improve the accuracy of QoS testing. In an example, an additional element, such as a configurable timer to minimize testing overhead or a technique to identify QoS violations prior to the completion of a measurement interval, may also be used. These techniques are generally useful but provide special benefit to real-time or delay-critical applications that are more likely use one link at a time to avoid reordering delay.

QoS flow control does not end with determining QoS metrics on secondary network links. Consider a situation in which wireless link capacity, for example, drops and cannot satisfy all QoS requirements for a traffic flow (e.g., for individual application or user data within a flow). The result may include degraded performance for all users, up to and including denial of service for some users.

To address the issue of degraded network link performance, a technique to dynamically prioritize flows, or flow components, within the same QoS class (e.g., intra-class priority) may be used. The intra-class priority may be based on various priority ranking metrics used to maximize the number of flows with QoS requirements that are met when the network resource degrades, achieving graceful degradation of services. Additional details and examples are provided below.

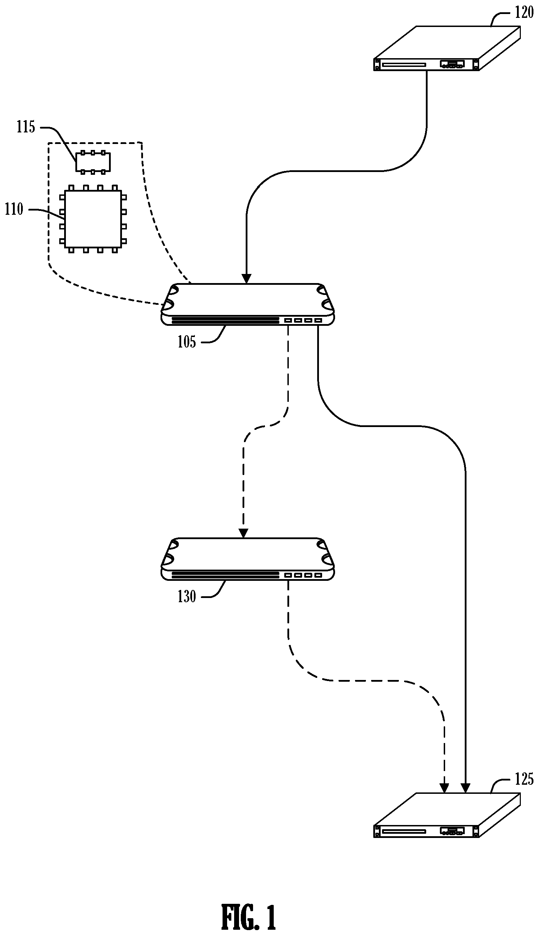

FIG. 1 is a block diagram of an example of an environment including a system for QoS network flow control, according to an embodiment. As illustrated, a network device 105 includes processing circuitry 110 and memory 115. The network device 105 also includes a set of communications interfaces to support multiple communication links. The set of communications interfaces may include physical terminations (e.g., jacks), one or more radios for radio frequency links, or any combination thereof. The network device 105 is receiving a traffic flow from a producer device 120 and sending the flow to a consumer device 125. As used herein, the terms producer and consumer denote direction with respect to data flow. As illustrated, the network device 105 has a physical link to the device 130.

Given the illustrated context, QoS network flow control is performed by the network device 105. For example, the memory 115 includes instructions that, when the network device 105 is in operation, configure, instruct, or otherwise cause the processing circuitry 110 to perform a variety of operations. For brevity, the following description described the processing circuitry 110 as configured to implement the action described.

The processing circuitry 110 is configured to pass the traffic flow from the producer device 120 over a first link. The first link is illustrated as a solid directed line to the consumer device 125. In this case, the first link meets a set of QoS requirements. In an example, the set of QoS requirements include a packet loss threshold. In an example, the set of QoS requirements include a packet latency threshold. The traffic flow here has QoS requirements that are met or exceeded by the performance of this first link.

The processing circuitry 110 is configured to detect the availability of the second link, illustrated as a dashed line to the device 130. The second link may be made available by the installation or powering-on of the device 130, the movement of a vehicle of which the device 130 is a part, etc. When the second link is detected, however, the network device 105 may be missing evidence that the second link meets the set of QoS requirements that are met by the first link. That is, the network device 105 does not have in the memory 115, or other storage, any previous telemetry, or other indication, of the QoS characteristics of the second link. Thus, immediately using the second link for the traffic flow may result in a QoS requirement violation.

The processing circuitry 110 is configured to testing the second link to determine whether the second link meets the set of QoS requirements. To perform the testing, the processing circuitry 110 is configured to copy a first portion of the traffic flow over the first link to create a testing flow. For example, given a packet sequence of 1, 2,...,99, 100, the first portion may be packets 50-60. A copy of these packets is made, the copies considered the testing flow. Thus, the testing flow is the same as the original flow but does not affect the original flow. The processing circuitry 110 is configured to send the testing flow over the second link and receive a response to the testing flow. The processing circuitry 110 is configured to receive the response in-band for the second link and measure telemetry of the testing flow over the second link. The processing circuitry 110 is configured to use this telemetry to determine that the second link meets the set of QoS requirements. The in-band nature of the telemetry ensures that the measurements represent the actual flow of the portion of the traffic flow over the second link. Thus, no additional telemetry packets are used, nor is the complexity (and need for availability) of a side-channel needed. Rather, a portion of the traffic flow is copied and sent over the second link to determine how that traffic performs on the second link.

Efforts may be made to mitigate the impact of the testing flow on the second link. This is possible because the testing flow is redundant and not needed at the consumer device 125. Thus, in an example, a packet in the testing flow is given the lowest priority provided by the second link to mitigate congestion at an endpoint, or other device (e.g., router, switch, etc.) of the second link. Here, the lowest priority refers to the priority levels available by the underlying carrier technology of the second link. In an example, the lowest priority is indicated in an IP header of the packet.

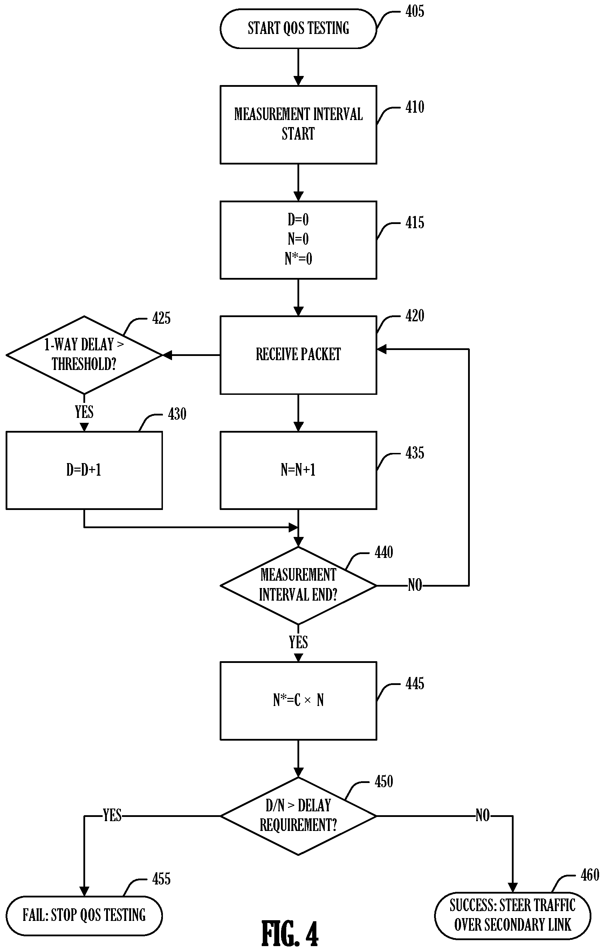

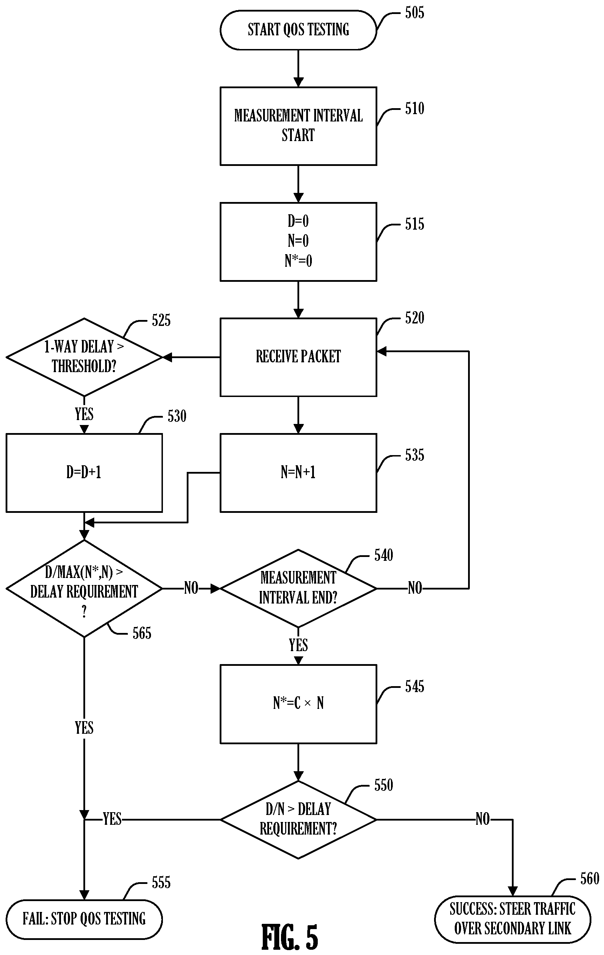

In an example, to determine that the second link meets the set of QoS requirements, the processing circuitry 110 is configured to obtain telemetry over a fixed time period. This may be called a measurement period, measurement interval, testing period, or the like. In this example, the telemetry is measured directly from responses to packets copied onto the second link, that is, responses to packets in the testing flow. FIG. 4 illustrates a similar example. In an example, to determine that the second link meets the set of QoS requirements, the processing circuitry 110 is configured to estimate telemetry from a subset of responses to packets copied onto the second link. FIG. 5 illustrates a similar example.

The processing circuitry 110 is configured to use the second link to pass a second portion of the traffic flow based on the second link meeting the set of QoS requirements. Here, once it is determined that the second link satisfies the QoS requirements of the traffic flow, subsequent traffic from the traffic flow may be directed to the second link. Thus, the second portion of the traffic flow includes some or all of the packets of the traffic flow following the determination that the second link meets the QoS requirements.

Once the second link is in use, continued monitoring may be used to ensure that the second link maintains compliance with the QoS requirements. Thus, in an example, the processing circuitry 110 is configured to determine, at a second time, that the second link does not meet the set of QoS requirements. Once this occurs, the processing circuitry 110 may stop using the second link to transmit the packets of the traffic flow, redirecting the part of the traffic flow sent on the second link to the first link. In an example, the processing circuitry 110 is configured to wait a threshold number of intervals before testing the second link again to determine whether the second link meets the set of QoS requirements. This example helps to prevent unnecessary repeat testing of the second link during periods in which is likely to fail again, such as directly following a failure.

The processing circuitry 110 is configured to record an indication that more testing is needed to determine whether the second link meets the set of QoS requirements based on an event. Here, in contrast to a schedule determining when testing should occur, the event operates similarly to an interrupt in a processor. In an example, the event is a period of inactivity on the second link. In an example, the period of inactivity has a length beyond a maximum idle threshold. In these examples, assuming that some previous testing enabled the use of the second link, the testing is not performed unless the second link is idle for the maximum threshold. This enables a reduction in testing using an assumption that the second link performance will remain acceptable with an idle period shorter than the maximum idle threshold.

In an example, the event is a violation of a member of the set of QoS requirements with respect to the second portion of the traffic flow. In an example, when the member of the set of QoS requirements is violated, the network device ceases use of the second link based on the event. As the second link is used to carry a portion of the traffic flow, the in-band telemetry may still be used to monitor the performance of the second link. In these examples, if the performance drops such that at least one of the QoS requirements is no longer met, the traffic flow designated for the second link is redirected to the first link to ensure compliance with the set of QoS requirements.

The above elements of QoS network flow control generally facilitate the validation of newly available yet unknown network links to direct traffic in compliance with QoS requirements. Such transient or unknown links may be prevalent in a variety of operating environments, such as vehicle-to-vehicle networks, or other ad hoc device participation scenarios. However, situations may arise in which a single link, such as the first link, is the only link that is available. Here, a situation may arise in which the link performance deteriorates such that one or more of the set of QoS requirements cannot be met for traffic flows on the link. Thus, without intervention, a QoS violation will or has occurred. To address such situations, an intra-class prioritization of traffic flows may be employed.

Intra-class priority denotes a sub-prioritization. For example, if the traffic flow and a second traffic flow have the same priority, the traffic flow may be given preference over the first traffic flow. Such intra-class priority is generally based on metrics outside of affirmative selection of priority by, for example, the producer device 120. In an example, the set of QoS requirements include a first class of QoS requirements and a second class of QoS requirements. In this example, the first class of QoS requirements and the second class of QoS requirements have the same type of QoS requirement and different values for the same type of QoS requirement. In this last example, the QoS requirements for the application of the traffic flow are the same for both flows. Again, this demonstrates that there is no explicit priority difference between the first traffic flow and the second traffic flow.

In an example, the processing circuitry 110 is configured to assign a first intra-class priority to the traffic flow and assign a second intra-class priority to a second traffic flow. Here, the traffic flow and the second traffic flow are in the first class of QoS requirements and the first intra-class priority has a higher priority than the second intra-class priority. Thus, the processing circuitry 110 has given the traffic flow a higher intra-class priority when the assigned priorities to the two traffics flows are the same.

A variety of metrics or data may be acted upon by the processing circuitry 110 to make intra-class priority determinations. In an example, the second traffic flow is assigned the second intra-class priority based on a greater packet rate than the traffic flow. In this example, the second traffic flow is using the link resource to a greater degree. The reduction in priority to the second traffic flow enables the first traffic flow data to clear and meet QoS requirements completely. This action may be considered a form of fairness whereby the second traffic flow bears the weight of the link degradation due to the greater use of the link by the second traffic flow. There are other "fairness" doctrines that may be applied for this result. In an example, the second traffic flow is assigned the second intra-class priority based on a longer session time than the traffic flow. In an example, the second traffic flow is assigned the second intra-class priority based on consuming a greater number of resources than the traffic flow.

In an example, the second traffic flow is assigned the second intra-class priority based on an inferior signal quality than the traffic flow. In this example, the poorer performance of the second traffic flow due to poor signal quality may result in greater overhead (e.g., retransmissions). Limiting the second traffic flow in this scenario prevents the additional overhead of the second traffic flow from impacting the QoS compliance of the network device 105 with respect to the first traffic flow.

In an example, the total number of intra-class priorities across a total number of QoS classes is based on total traffic flow across QoS classes. This example acknowledges that intra-class priorities are tied to the reality of the total traffic transmission passing through the network device 105. Thus, an equal division of intra-class priorities may be applied QoS classes. For example, two intra-class priorities may be assigned to each of three QoS classes. In contrast, the intra-class priorities may be assigned only to a single QoS class, the QoS class impacted by the performance degradation of the link. For example, if the link may still support the first QoS class traffic without impact, but the second QoS class traffic cannot be met due to the new link characteristics, then the intra-class priorities are assigned only to this second QoS class.

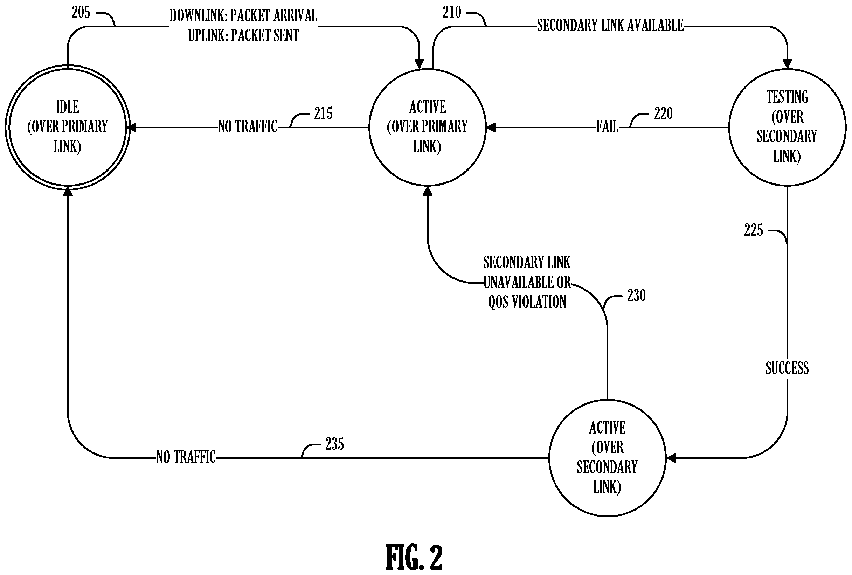

FIG. 2 illustrates an example of state transitions for multi-access traffic steering, according to an embodiment. The illustrated finite state machine (FSM) may be directly implemented by a control system of a network device (e.g., the network device 105 illustrated in FIG. 1). The FSM operates to ensure that QoS requirements of a traffic flow will be met regardless of which physical network (e.g., Wi-Fi, cellular, etc.) is used to transport the flow. The FSM is illustrated with the following four states: Idle, QoS Testing, Active (over primary link), and Active (over secondary link). In an example, the primary link may be a cellular connection and secondary link may be a wireless local area network (WLAN) such as Wi-Fi.

The idle state is the initial state before a downlink or uplink traffic flow starts, or after a period in which no data is communicated to the device. In this latter case, the FSM returns to the idle state via transition 215 or transition 235. Thus, when a traffic flow starts, the FSM moves to the active state (transition 205) from the idle state.

In the active state, the device is scheduling transmission of the traffic over the primary link. While actively transmitting over the primary link, the secondary link may become available. Here, the FSM moves to testing the secondary link for QoS compliance (transition 210). If the testing fails, the FSM follows transition 220 back to the active state. If the testing succeeds, the FSM moves to the active-secondary link state (transition 225).

In the active-secondary link state, the device is actively transmitting data over the secondary link. This transmission generally involves sending some traffic over the primary link as well as the secondary link, although, exclusive transmission of the traffic over the secondary link, to free the primary link for other uses, is also possible. If, when in the active-secondary link state, the secondary link becomes unavailable, or changes such that the QoS requirements are no longer met, the FSM moves to the active state (transition 230). If the traffic ceases for a predetermined period, an idle period, then the FSM moves back to the idle state (transition 235).

The exchange of traffic steering control messages enables a client and server synchronize on state transitions. In an example, a downlink or uplink QoS flow starts in the Idle state, and its traffic is transmitted over the primary link to begin with. The client may initiate state transitions in both directions. The downlink state may transition (e.g., transition 205) from Idle to Active over the primary link when a packet is received by the client. Similarly, uplink state transitions (e.g., transition 205) when the client sends a packet to the server. For bidirectional traffic, the uplink and downlink states may be managed separately. For instance, when the downlink is Active over the primary link, the uplink may be Idle.

When the secondary link, such as Wi-Fi, becomes available, the client may follow transition 210 to the QoS Testing state while continuing to transmit data packets over the primary link. As noted above, data packets are duplicated over the secondary link for QoS testing and are marked with low priority (e.g., best-effort traffic) using, for example, the DiffServ Code Point (DSCP) field in the IP header. In general, the testing packets are discarded by the receiver after measuring QoS metrics.

In an example, a pre-configured control parameter, T_fail may be used to indicate a minimum interval between two successive QoS testing activities. For example, if QoS testing fails, the next QoS testing activity (e.g., round, experiment, etc.) is prohibited within the T_fail time period, such as ten seconds. If QoS testing succeeds, the device stops duplicating packets and steers some or all of data traffic of the flow from the primary link to the secondary link (transition 225). In an example, the device marks the DSCP field of the data packets based on the original QoS requirement for the traffic flow. For example, a high priority for voice or video applications. In this way, the transmission over the secondary link is now prioritized over testing traffic. With the DSCP marking strategy, when QoS testing is initiated over a saturated secondary link, testing packets will be dropped or delayed so that QoS testing will fail, but data traffic of a QoS flow that has already been steered to the secondary link remains unaffected (e.g., no QoS violations).

In the Active (over the secondary link) state, the system is actively sending or receiving data over the secondary link. If there is no data transmission or reception for a certain period (e.g., one second), the system switches back to the initial Idle state (transition 235), indicating that the secondary link is not being used. If the secondary link is unavailable or a QoS violation is detected, the system falls back to the Active (primary) state (transition 230), which means that the primary link is being used for data transmission or reception. However, when the receiver does not receive any data packets, it could indicate that all packets over the secondary link are being dropped (i.e., secondary link unavailable), or the flow has no data to send (i.e., Idle). If the receiver cannot differentiate these two cases, it falls back to Idle (transition 235).

In an example, a second pre-configured control parameter, T_valid, may be used to indicate a maximum idle period for skipping QoS testing. Here, the device may switch back to a previously idle secondary link without additional QoS testing if the period between the last traffic on the secondary link and now is less than (or in some cases also equal to) T_Valid. Once the flow resumes over the primary link from the Idle state, and T_valid (e.g., five seconds) is not expired, the device may switch to the secondary link without conducting QoS testing to minimize the overhead of duplicate packet testing. A Traffic Splitting Update (TSU) message may be transmitted over the secondary link to initiate a traffic splitting update. If the secondary link is available, the TSU message will be received by the receiver to update the traffic splitting decision. However, if the secondary link is unavailable, the TSU message will not be delivered, indicating a QoS violation. In such a case, the system will remain in the Active (over the primary link) state and request QoS Testing again after T_fail.

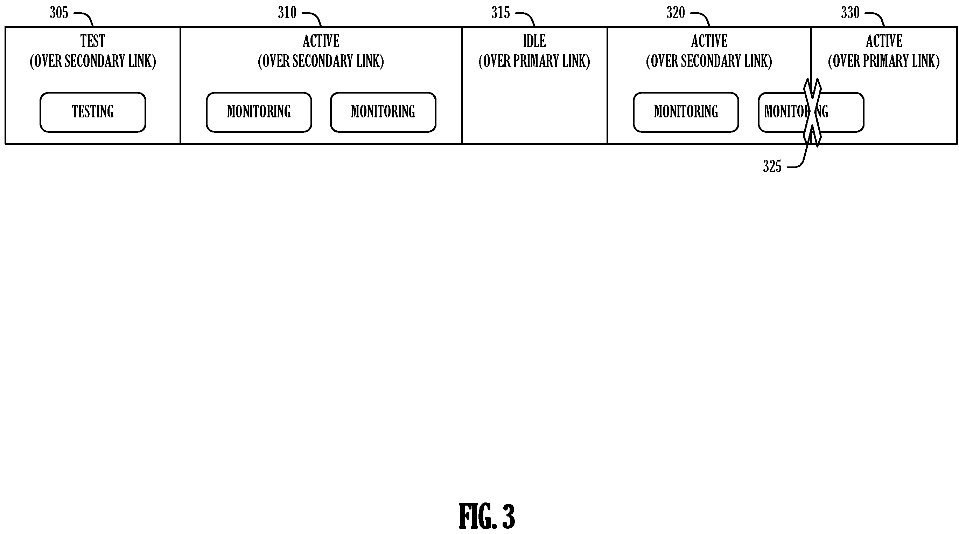

FIG. 3 illustrates an example testing and monitoring timeline, according to an embodiment. During the QoS testing state 305, the receiver performs a one-time measurement to evaluate the QoS on the secondary link. If the initial measurement (for QoS testing) is successful, traffic is directed to the secondary link, and the QoS measurement is repeated multiple times (for QoS monitoring) (state 310). When the flow becomes idle 315, traffic is switched back to the primary link, and the measurement is stopped. After the flow becomes active again (assuming the T_valid timer has not expired), the system switches back to the secondary link without performing QoS testing (state 320). If the QoS monitoring detects a violation 325 in the middle of a measurement interval, traffic is diverted back to the primary link (state 330) immediately.

FIG. 4 illustrates an example of control flow for testing and monitoring, according to an embodiment. When QoS testing is started (operation 405), QoS metrics from received packets are calculated during a fixed timeframe, such as, within one second. Thus, the measurement interval is started (operation 410) and the QoS metrics are set to initial values (operation 415). As illustrated the values are delay (D), packet count (N), and predicted packet count (N*). When a packet is received (operation 420), the packet count N is incremented (operation 435). Also, a determination is made as to whether the delay is greater than a predefined threshold (decision 425). If yes, then the delay counter D is incremented (operation 430). Once the increments are performed, a check is made as to whether the measurement interval has concluded (decision 440). If not, the flow loops to the receipt of another packet (operation 420). If the measurement interval is concluded, then the predicted packet count N* is set to the number of packet N multiplied by a constant (e.g., scaling factor) C (operation 445). Then, the delay D is divided by the packet count N and compared to a delay requirement (e.g., a QoS requirement) (decision 450). If the value is greater than the requirement, then the testing fails (operation 455). Otherwise, the QoS testing is successful, and the secondary link may be used for traffic (operation 460). This flow may be extended to measure other metrics, such as packet loss. The predicted total packet count N* computed at the end of the measurement interval may be used for QoS monitoring, an example of which is described below.

FIG. 5 illustrates an example of a control flow for testing and monitoring, according to an embodiment. The flow of FIG. 4 may be more appropriate for initial QoS testing of the secondary link because, even if the QoS over the secondary link is violated, data traffic will still be transmitted over the primary link, ensuring that the users QoS requirements are met even with an unsatisfactory secondary link. However, using a fixed interval measurement when traffic is sent over the secondary link for QoS monitoring may result in a delayed recognition of an unsatisfactory secondary link, which may impact the user experience. Thus, in an example, the flow illustrated in FIG. 5 may be used for on-going QoS compliance monitoring because this flow is likely to detects QoS violations more quickly.

The operations of this flow largely follow those of FIG. 4. Thus, when QoS testing is started 505, the measurement interval is started (operation 510) and the QoS metrics are set to initial values (operation 515). As illustrated the values are delay (D), packet count (N), and predicted packet count (N*). When a packet is received (operation 520), the packet count N is incremented (operation 535). Also, a determination is made as to whether the delay is greater than a predefined threshold (decision 525). If yes, then the delay counter D is incremented (operation 530). Now deviating from the flow of FIG. 4, after the increments are performed, a delay check (decision 565) is performed. Here, the delay D is divided by whichever is greater of the packet count N or the predicted packet count N*, the result is compared to a predetermined delay_count threshold. If the delay calculation is greater than this threshold, then the flow fast-fails, jumping directly to testing fails (operation 555). Otherwise, the flow proceeds similarly to the flow of FIG. 4. Thus, a check is made as to whether the measurement interval has concluded (decision 540). If not, the flow loops to the receipt of another packet (operation 520). If the measurement interval is concluded, then the predicted packet count N* is set to the number of packet N multiplied by a constant (e.g., scaling factor) C (operation 545). Then, the delay D is divided by the packet count N and compared to a delay requirement (e.g., a QoS requirement) (decision 550). If the value is greater than the requirement, then the testing fails (operation 555). Otherwise, the QoS testing is successful, and the secondary link may be used for traffic (operation 560).

It is worth noting that the flow of FIG. 5 enables an estimation of a QoS metric value after receiving each packet. The metric delay D is illustrated. Because the device is unaware of the total packet number N until the measurement interval ends, an estimation of the delay violation rate (e.g., after each packet arrival) may be made by using the number of packets with high delay d in the current measurement interval and the predicted total packet count N*. This enables the device to detect possible QoS violations before the end of the measurement interval and promptly report a failure.

There are many ways to predict the predicted total packet count N* based on past measurement results, such as linear regression and Long Short-Term Memory (LSTM). As illustrated, a simple weighted factor C (e.g., 0.5) times the packet count in the previous interval is used. Consequently, the expected delay violation ratio equals D/max(N, N*). The initial value of N* may be calculated from the QoS testing and updated after each QoS monitoring measurement interval ends. When a new measurement starts, N* is greater than N. The expected violation is computed based on the high delay packet counts in the current interval and the predicted packet count N*. As the measurement proceeds, N may increase and surpass N* indicating the measurement may end soon, prompting the use of the measured packet count in this interval.

The following examples transition from testing the secondary link to techniques used in a single link to adjust traffic flows under adverse conditions in light of QoS requirements. In the context of MAMS, MAMS has the goal of ensuring that traffic flows meet their QoS requirements, regardless of which physical network is used to transport the flow. However, if the link capacity drops and cannot support all flows to meet their QoS requirements, users with the same priority will compete for resources. This can result in degraded performance for all users or even complete denial of service for some users, which is undesirable. To address this issue, flows may be dynamically prioritized within the same QoS class. The dynamic prioritization may be based on a priority ranking intended to maximize the number of flows that meet the QoS requirements when the network resource degrades, achieving graceful degradation of services.

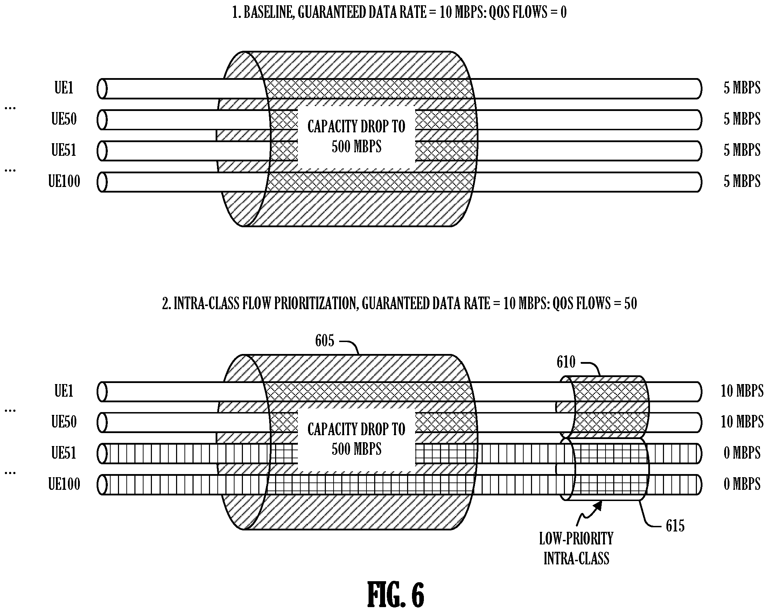

FIG. 6 illustrates an example of intra-class flow prioritization, according to an embodiment. In general, dynamic intra-class flow prioritization enables dynamic division of traffic flows of the same QoS class into multiple intra-class priorities (e.g., from high to low). This may enable network devices-such as access points, bases stations, routers, switches, etc.-to meet QoS requirements for a subset of flows when network resource are reduced, sometimes unpredictably. In an example, dynamic intra-class flow prioritization only affects flows of the same QoS class and does not impact how flows with different QoS classes (i.e., inter-class prioritization), which is usually configured through policy and service level agreement (SLA).

The top of the figure illustrates multiple flows (UE1-UE100) in a QoS class (e.g., high priority) when capacity 605 of the link drops. Assume that the network is capable of supporting 100 flows each of which runs at 10 megabits per second (Mbps) during normal operation. However, due to strong interference from an unknown source, the network capacity 605 is reduced by 50% so that only 50 such flows can meet their QoS requirements. As a result, all 100 flows will compete for the reduced resource and suffer from QoS violation. With dynamic intra-class flow prioritization, the flows may be divided into two intra-class priority groups: high 610 and low 615, each of which has of 50 flows. This may ensure that the high-priority group 610 will meet the QoS requirements.

It may be challenging to predict how much degradation will occur in a wireless network, and therefore more intra-class priority levels may lead to better resiliency. In the example above, if the network capacity 605 is reduced by 60% instead of 50%, there won't be enough resources for the high-priority group 610 either. However, if there are three priority groups-such as low 615, medium (not illustrated), and high 610), each of which has one third of the flows, the QoS requirements of the high priority group 610 at least may be met. Generally, with N intra-class priority levels, graceful degradation may be supported when network capacity is reduced by up to (N-1) / N.

There are many ways to rank the flows in the same QoS class and assign intra-class priorities. For example, traffic flows may be randomly selected to be in the intra-class groups (e.g., random ranking). In an example, traffic flows may be ranked according to network metrics, such as channel quality. For example, a better channel quality than another flow receives a higher priority than the other flow. In an example, the traffic flows may be ranked according to throughput requirements. For example, a lower throughput than another traffic flow is given higher priority than the other traffic flow. Another example ranking criteria may include how long a flow has been active. Here, the longer the flow is active the lower the priority.

Wireless networks, such as Wi-Fi and cellular networks, often use mapping rules to prioritize flows by assigning them to QoS classes. For instance, Wi-Fi networks use a mapping table to assign a DSCP value to IEEE 802.11 User Priority as defined in the standard. Cellular networks use a Traffic Flow Template (TFT) entity to map data flows to a particular radio bearer as discussed in the standard. In an example, the present techniques use DSCP to indicate both the intra-class priority level as well as the QoS class for a flow. If there are three QoS classes and three intra-class priority levels per class, nine (3 × 3 = 9) different DSCP values will be used. In an example, DSCP is used to indicate the QoS class for a flow, and the per-packet priority field in the Generic Multi-Access (GMA) header to indicate the intra-class priority level for the flow. In this example, only three different DSCP values would be used.

In operation, an uplink data flow may operate at a receiver of the traffic flow, or network device as described above. At the receiver, an uplink measurement (e.g., for all users) is periodically collected (e.g., every 1 second). This uplink measurement may include a data rate and QoS marking (e.g., high or low priority) for each user over each link.

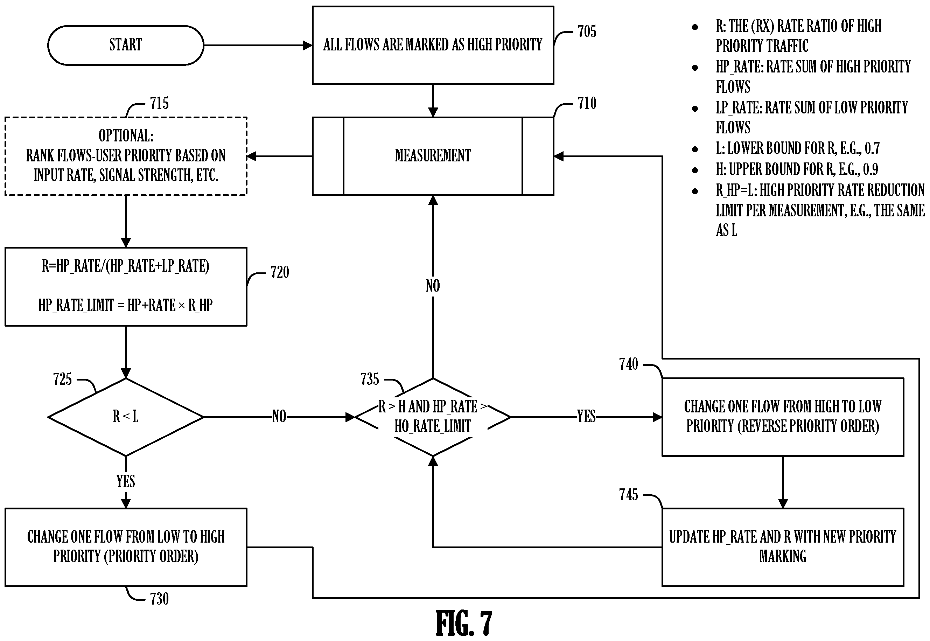

At the end of a (e.g., each) measurement interval, HP_rate and LP_rate may be calculated. Here, HP_rate represents the total throughput of high-priority flows and LP_rate represents the total throughput of low-priority flows. Dynamic Flow Prioritization (DFP) (an example of which is illustrated in FIG. 7) is used to update the intra-class priority for a flow based on the HP_rate and LP_rate. An Intra-Class Priority Update (MAMS/GMA) control message is used to inform the client to update the priority level for the flow based on the output of the DFP. In an example, the Intra-Class Priority Update control message includes one or more of:
- A Flow ID: the unsigned integer to identify the QoS flow.
- An Intra-Class Priority: the intra-class priority assigned to the flow.
- A DSCP value: the DSCP value assigned to the flow, based on the intra-class priority.

At a transmitter (e.g., client or client device), initially, the high-priority DSCP value is assigned to all QoS flows. Upon receiving the Intra-Class Priority Update control message, the client modifies the DSCP value for the flow accordingly.

For downlink flows, at the receiver (which is not the client device), the client sends a report to the server (e.g., transmitter in the downlink) at regular intervals (e.g., every 1 second) containing downlink measurements. The measurements may include the QoS data rate received by each user (e.g., flow) over each link.

At the transmitter (e.g., server, or network device), initially, high-priority DSCP value is assigned to all QoS flows. Upon receiving the QoS rate measurements, the DFP is applied to each link. For users without measurements (e.g., assuming retransmissions are in place), a data rate of zero may be adopted. The transmitter may then the QoS marking based on the results of the DFP and adjust the DSCP of the packets accordingly before transmission.

FIG. 7 illustrates an example of a control flow for dynamic flow prioritization (DFP), according to an embodiment. At the start, all QoS flows are assigned a high-priority DSCP value (operation 705). Measurements are then performed (operation 710). At the end of a measurement interval, optionally, the flow may be ranked based on <1> Input rate, <2> Signal quality, etc., from high to low priority (operation 715). In operation 720, a rate R is calculated according to R = HP_rate/(HP_rate + LP_rate), where HP and LP stand for high priority and low priority. Also in operation 720, A high priority rate limit HP_rate_limit is calculated according to HP_rate_limit = HP_rate × R_HP. HP_rate_limit is set to avoid moving too many flows from high priority to low priority at once.

If R < L (decision 725)-that is, if R is below the lower bound L-, then one HP flow is added per interval. Thus, one flow is changed from LP to HP (operation 730). Otherwise, while R > Hand HP_rate > HP_rate_limit-that is,the HP_rate is above the higher bound and also the HP_rate_limit-(decision 735), HP flows will be reduced. Accordingly, one flow is changed from HP to LP (operation 740). Here, the variable x is used to indicate the throughput of the demoted flow. Then, the HP rate is updated according to HP rate = HP_rate - x-the LP_rate stays the same-and the rate R is updated according to R = HP_rate/(HP_rate + LP_rate) (operation 745). The control flow then continues to demote flows until the R > Hand HP_rate > HP_rate_limit condition changes (decision 735), and the control flow returns to a measurement (operation 710).

Consider the following examples. Here R_HP = L = 0.7 and H = 0.9.
- Measurement 1 (R<L): HP_rate = 10; LP_rate = 10; à R = 0.5
   ∘ change one flow from low to high priority
- Measurement 2 (R>H): HP_rate = 20; LP_Rate = 2; à R = 0.91, HP_rate_limit = 14
   ∘ change multiple flows from high to low priority until R ≤ H or HP_rate ≤ HP_rate_limit
   ∘ HP_rate = 20-2=18; LP_rate = 2; à R = 0.9 (R ≤ H is met)
- Measurement 3 (R>H): HP_rate = 20, LP_rate = 0.2; à R = 0.99, HP_rate_limit = 14
   ∘ change multiple flows from high to low priority until R ≤ H or HP_rate ≤ HP_rate_limit
   ∘ HP_rate = 20-6=14; LP_rate = 0.2; (HP_rate ≤ HP_rate_limit is met)

The DFP works for users with either constant or elastic data rates. For users with guaranteed data rates, either specified in the service agreement or measured by the transmitter as input data rate, an equal-share DFP with only one configurable parameter: N, may be used. N indicates the number of intra-class priority levels. Here, the flows are divided into N groups, each of which has a subset of flows with a guaranteed data rate equal to 1/N of the total guaranteed data rate of all flows.

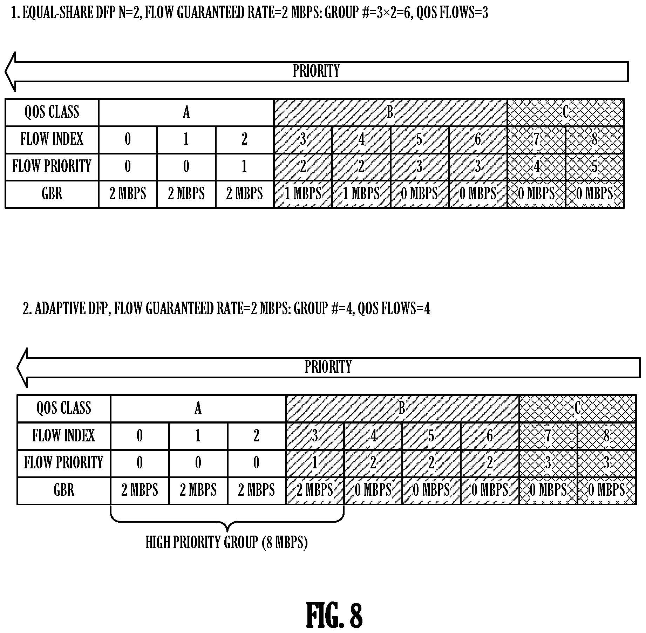

FIG. 8 illustrates an example of intra-class flow prioritization, according to an embodiment. Here there is a hierarchical inter-class and intra-class DFP. The hierarchical DFP takes into account both the QoS class priority and the intra-class flow priority. Suppose a network is shared by three QoS classes: A, B, and C. The inter-class priority is pre-configured in the service agreement: A > B > C, and the intra-class priority for a flow can be determined dynamically by an equal-share or adaptive DFP technique. For example, with the equal-share DFP and N = 2, the total priority level is six (three inter-class priorities × two intra-class priorities), as opposed to four levels used by the adaptive variant that splits only one QoS class into two intra-class priorities. The difference between the DFP techniques may be summarized by the way in which intra-class priority is assigned. The equal-share technique divides resources equally among users in the same QoS class based on their guaranteed data rate regardless of the system capacity. In contrast, the adaptive technique considers both the guaranteed data rate and the capacity estimation to ensure users that are assigned to high intra-class priority always meet the QoS requirement.

For example, suppose the network capacity drops from 18 Mbps to 8 Mbps. With the equal-share DFP algorithm, flows in QoS class A, regardless of high or low intra-class priority, always meet the guaranteed data rate. However, even though flows three and four in class B have higher intra-class priority, their rate is not high enough to meet their demand (two Mbps). Therefore, only three QoS flows are supported. With the adaptive DFP algorithm, since the capacity limit (eight Mbps) is more than the demands of all flows in QoS class A (six Mbps), no intra-class prioritization is needed. For the remaining two Mbps bandwidth, the adaptive DFP assigns one flow in QoS class B as an intra-class high priority, resulting in a total of four supported QoS flows. Despite having four high- priority flows, the hierarchical DFP preserves class-level priority. Thus, flows in QoS class A are assigned a higher inter-class priority than those in QoS class B.

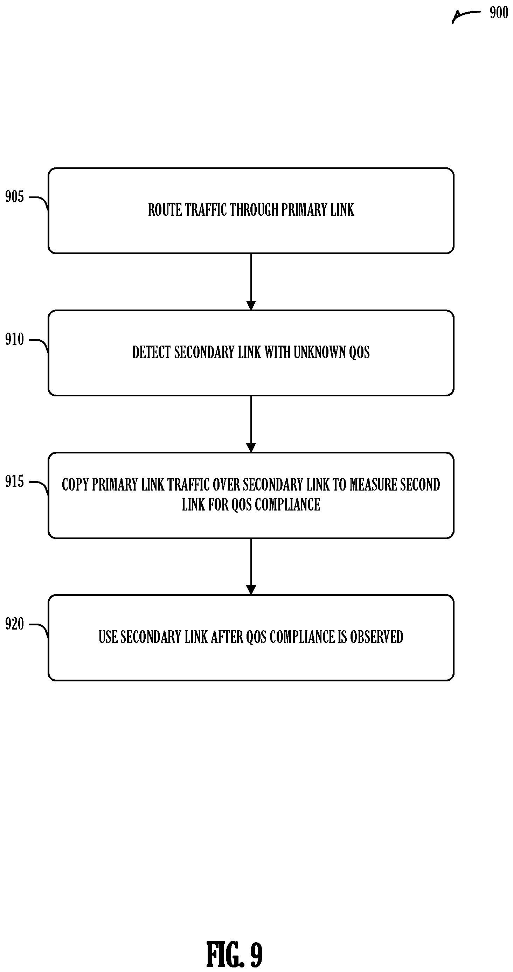

FIG. 9 illustrates a flow diagram of an example of a method 900 for QoS network flow control, according to an embodiment. The operations of the method 900 are performed by computational hardware, such as that described above or below (e.g., processing circuitry or a network device).

At operation 905, a traffic flow is passed over a first link by a network device. Here, the first link meets a set of QoS requirements. In an example, the set of QoS requirements include a packet loss threshold. In an example, the set of QoS requirements include a packet latency threshold.

At operation 910, the network device detects the availability of a second link. However, the network device is missing evidence that the second link meets the set of QoS requirements that are met by the first link.

At operation 915, the network device performs testing to determine that the second link meets the set of QoS requirements. The testing includes copying a first portion of the traffic flow over the first link to create a testing flow, sending the testing flow over the second link, receiving a response to the testing flow-the response being in-band for the second link-and measuring telemetry of the testing flow over the second link based on the response to determine that the second link meets the set of QoS requirements.

In an example, a packet in the testing flow is given a lowest priority provided by the second link to mitigate congestion at an endpoint of the second link. In an example, the lowest priority is indicated in an Internet Protocol (IP) header of the packet.

In an example, determining that the second link meets the set of QoS requirements includes obtaining telemetry over a fixed time period. In this example, the telemetry is measured directly from responses to packets copied onto the second link. In an example, determining that the second link meets the set of QoS requirements includes estimating telemetry from a subset of responses to packets copied onto the second link.

At operation 920, the network device uses the second link to pass a second portion of the traffic flow based on the second link meeting the set of QoS requirements.

In an example, the method 900 may include the additional operations of determining, at a second time, that the second link does not meet the set of QoS requirements. Then, waiting a threshold number of intervals before testing the second link again to determine whether the second link meets the set of QoS requirements.

In an example, the method 900 may include the additional operation of recording an indication that more testing is needed to determine whether the second link meets the set of QoS requirements based on an event. In an example, the event is a period of inactivity on the first link. In an example, the period of inactivity has a length beyond a maximum idle threshold. In an example, the event a violation of a member of the set of QoS requirements with respect to the second portion of the traffic flow. In an example, where the member of the set of QoS standards is violated, the network device ceases use of the second link based on the event.

In an example, considering the traffic flow on either the first link or the second link, an intra-class prioritization may be performed. In an example, the set of QoS requirements include a first class of QoS requirements and a second class of QoS requirements. In this example, the first class of QoS requirements and the second class of QoS requirements have the same type of QoS requirement and different values for the same type of QoS requirement.

In an example, a first intra-class priority is assigned to the traffic flow and a second intra-class priority is assigned to a second traffic flow. Here, the traffic flow and the second traffic flow are in the first class of QoS requirements and the first intra-class priority has a higher priority than the second intra-class priority. In an example, the second traffic flow is assigned the second intra-class priority based on a greater packet rate than the traffic flow. In an example, the second traffic flow is assigned the second intra-class priority based on an inferior signal quality than the traffic flow. In an example, the second traffic flow is assigned the second intra-class priority based on a longer session time than the traffic flow. In an example, the second traffic flow is assigned the second intra-class priority based on consuming a greater number of resources than the traffic flow. In an example, the total number of intra-class priorities across a total number of QoS classes is based on total traffic flow across QoS classes.

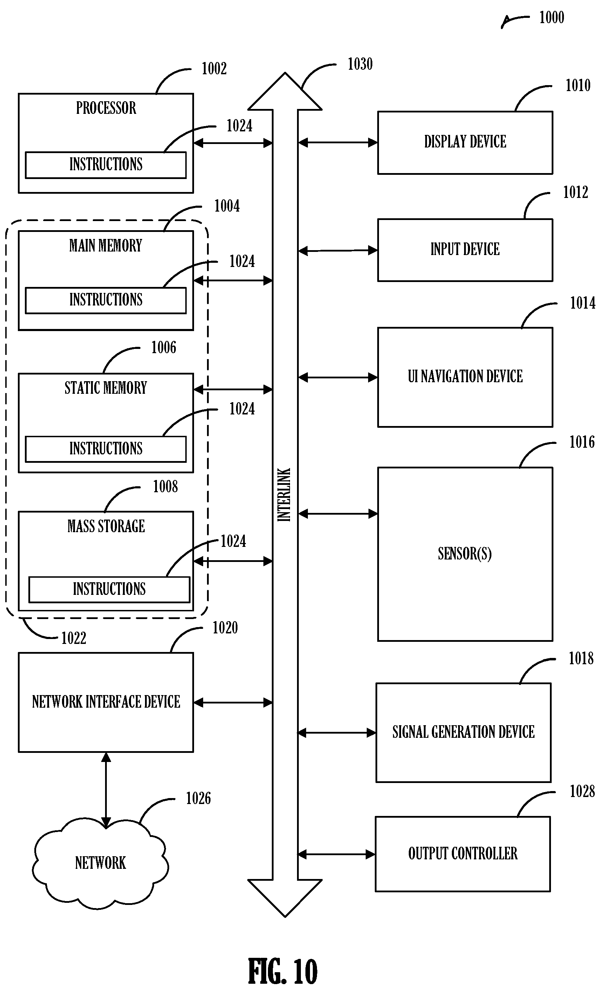

FIG. 10 illustrates a block diagram of an example machine 1000 upon which any one or more of the techniques (e.g., methodologies) discussed herein may perform. Examples, as described herein, may include, or may operate by, logic or a number of components, or mechanisms in the machine 1000. Circuitry (e.g., processing circuitry) is a collection of circuits implemented in tangible entities of the machine 1000 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 1000 follow.

In alternative embodiments, the machine 1000 may operate as a standalone device or may be connected (e.g., networked) to other machines. In a networked deployment, the machine 1000 may operate in the capacity of a server machine, a client machine, or both in server-client network environments. In an example, the machine 1000 may act as a peer machine in peer-to-peer (P2P) (or other distributed) network environment. The machine 1000 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 1000 may include a hardware processor 1002 (e.g., a central processing unit (CPU), a graphics processing unit (GPU), a hardware processor core, or any combination thereof), a main memory 1004, a static memory (e.g., memory or storage for firmware, microcode, a basic-input-output (BIOS), unified extensible firmware interface (UEFI), etc.) 1006, and mass storage 1008 (e.g., hard drives, tape drives, flash storage, or other block devices) some or all of which may communicate with each other via an interlink (e.g., bus) 1030. The machine 1000 may further include a display unit 1010, an alphanumeric input device 1012 (e.g., a keyboard), and a user interface (UI) navigation device 1014 (e.g., a mouse). In an example, the display unit 1010, input device 1012 and UI navigation device 1014 may be a touch screen display. The machine 1000 may additionally include a storage device (e.g., drive unit) 1008, a signal generation device 1018 (e.g., a speaker), a network interface device 1020, and one or more sensors 1016, such as a global positioning system (GPS) sensor, compass, accelerometer, or other sensor. The machine 1000 may include an output controller 1028, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 1002, the main memory 1004, the static memory 1006, or the mass storage 1008 may be, or include, a machine readable medium 1022 on which is stored one or more sets of data structures or instructions 1024 (e.g., software) embodying or utilized by any one or more of the techniques or functions described herein. The instructions 1024 may also reside, completely or at least partially, within any of registers of the processor 1002, the main memory 1004, the static memory 1006, or the mass storage 1008 during execution thereof by the machine 1000. In an example, one or any combination of the hardware processor 1002, the main memory 1004, the static memory 1006, or the mass storage 1008 may constitute the machine readable media 1022. While the machine readable medium 1022 is illustrated as a single medium, the term "machine readable medium" may include a single medium or multiple media (e.g., a centralized or distributed database, and/or associated caches and servers) configured to store the one or more instructions 1024.

The term "machine readable medium" may include any medium that is capable of storing, encoding, or carrying instructions for execution by the machine 1000 and that cause the machine 1000 to perform any one or more of the techniques of the present disclosure, or that is capable of storing, encoding or carrying data structures used by or associated with such instructions. Non-limiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 1022 may be representative of the instructions 1024, such as instructions 1024 themselves or a format from which the instructions 1024 may be derived. This format from which the instructions 1024 may be derived may include source code, encoded instructions (e.g., in compressed or encrypted form), packaged instructions (e.g., split into multiple packages), or the like. The information representative of the instructions 1024 in the machine readable medium 1022 may be processed by processing circuitry into the instructions to implement any of the operations discussed herein. For example, deriving the instructions 1024 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 1024.

In an example, the derivation of the instructions 1024 may include assembly, compilation, or interpretation of the information (e.g., by the processing circuitry) to create the instructions 1024 from some intermediate or preprocessed format provided by the machine readable medium 1022. The information, when provided in multiple parts, may be combined, unpacked, and modified to create the instructions 1024. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 1024 may be further transmitted or received over a communications network 1026 using a transmission medium via the network interface device 1020 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi^{®}, IEEE 802.15.4 family of standards, peer-to-peer (P2P) networks, among others. In an example, the network interface device 1020 may include one or more physical jacks (e.g., Ethernet, coaxial, or phone jacks) or one or more antennas to connect to the communications network 1026. In an example, the network interface device 1020 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1000, and includes digital or analog communications signals or other intangible medium to facilitate communication of such software. A transmission medium is a machine readable medium.

### Additional Notes & Examples

Example 1 is a device for quality-of-service (QoS) network flow control, the device comprising: a set of communications interfaces, the set of communications interfaces supporting multiple communications links including a first link and a second link; a memory including instructions; and processing circuitry that, when in operation, is configured by the instructions to: pass a traffic flow over the first link, the first link meeting a set of QoS requirements; detect an availability of the second link; determine that the second link meets the set of QoS requirements, including the processing circuitry to: copy a first portion of the traffic flow to create a testing flow; send the testing flow over the second link; receive a response to the testing flow over the second link; and use the second link to pass a second portion of the traffic flow based on the second link meeting the set of QoS requirements.

In Example 2, the subject matter of Example 1, wherein, to receive the response to the testing flow over the second link, the processing circuitry is configured by the instructions to measure telemetry of the testing flow based on the response to determine that the second link meets the set of QoS requirements.

In Example 3, the subject matter of any of Examples 1-2, wherein the response to the testing flow received over the second link is in-band for the second link.

In Example 4, the subject matter of any of Examples 1-3, wherein a packet in the testing flow is given a lowest priority provided by the second link to mitigate congestion at an endpoint of the second link.

In Example 5, the subject matter of Example 4, wherein the lowest priority is indicated in an Internet Protocol header of the packet.

In Example 6, the subject matter of any of Examples 1-5, wherein the set of QoS requirements include a packet loss threshold.

In Example 7, the subject matter of any of Examples 1-6, wherein the set of QoS requirements include a packet latency threshold.

In Example 8, the subject matter of any of Examples 1-7, wherein the processing circuitry is further to: determine, at a second time, that the second link does not meet the set of QoS requirements; and wait a threshold number of intervals before testing the second link again to determine whether the second link meets the set of QoS requirements.

In Example 9, the subject matter of any of Examples 1-8, wherein the processing circuitry is further to record an indication that more testing is needed to determine whether the second link meets the set of QoS requirements based on an event.

In Example 10, the subject matter of Example 9, wherein the event is a period of inactivity on the second link.

In Example 11, the subject matter of Example 10, wherein the period of inactivity has a length beyond a maximum idle threshold.

In Example 12, the subject matter of any of Examples 9-11, wherein the event is a violation of a member of the set of QoS requirements with respect to the second portion of the traffic flow.

In Example 13, the subject matter of any of Examples 9-12, wherein the processing circuitry is further to cease use of the second link based on the event.

In Example 14, the subject matter of any of Examples 1-13, wherein, to determine that the second link meets the set of QoS requirements, the processing circuitry is to obtain telemetry over a fixed time period, the telemetry being directly measured from responses to packets copied onto the second link.

In Example 15, the subject matter of any of Examples 1-14, wherein, to determine that the second link meets the set of QoS requirements, the processing circuitry is to estimate telemetry from a subset of responses to packets copied onto the second link.

In Example 16, the subject matter of any of Examples 1-15, wherein the set of QoS requirements include a first class of QoS requirements and a second class of QoS requirements, the first class of QoS requirements and the second class of QoS requirements having a same type of QoS requirement and different values for the same type of QoS requirement.

In Example 17, the subject matter of Example 16, wherein the processing circuitry is further to assign a first intra-class priority to the traffic flow and a second intra-class priority to a second traffic flow, wherein the traffic flow and the second traffic flow are in the first class of QoS requirements, the first intra-class priority having a higher priority than the second intra-class priority.

In Example 18, the subject matter of Example 17, wherein the second traffic flow is assigned the second intra-class priority based on a greater packet rate than the traffic flow.

In Example 19, the subject matter of any of Examples 17-18, wherein the second traffic flow is assigned the second intra-class priority based on an inferior signal quality than the traffic flow.

In Example 20, the subject matter of any of Examples 17-19, wherein the second traffic flow is assigned the second intra-class priority based on a longer session time than the traffic flow.

In Example 21, the subject matter of any of Examples 17-20, wherein the second traffic flow is assigned the second intra-class priority based on consuming a greater number of resources than the traffic flow.

In Example 22, the subject matter of any of Examples 17-21, wherein a total number of intra-class priorities across a total number of QoS classes is based on total traffic flow across QoS classes.

Example 23 is a method for quality-of-service (QoS) network flow control, the method comprising: passing, by a network device, a traffic flow over a first link, the first link meeting a set of QoS requirements; detecting an availability of a second link to the network device; determining, by the network device, that the second link meets the set of QoS requirements, including: copying a first portion of the traffic flow to create a testing flow; sending the testing flow over the second link; and receiving a response to the testing flow over the second link; and using, by the network device, the second link to pass a second portion of the traffic flow based on the second link meeting the set of QoS requirements.

In Example 24, the subject matter of Example 23, wherein receiving the response to the testing flow over the second link includes measuring telemetry of the testing flow based on the response to determine that the second link meets the set of QoS requirements.

In Example 25, the subject matter of any of Examples 23-24, wherein the response to the testing flow received over the second link is in-band for the second link.

In Example 26, the subject matter of any of Examples 23-25, wherein a packet in the testing flow is given a lowest priority provided by the second link to mitigate congestion at an endpoint of the second link.

In Example 27, the subject matter of Example 26, wherein the lowest priority is indicated in an Internet Protocol header of the packet.

In Example 28, the subject matter of any of Examples 23-27, wherein the set of QoS requirements include a packet loss threshold.

In Example 29, the subject matter of any of Examples 23-28, wherein the set of QoS requirements include a packet latency threshold.

In Example 30, the subject matter of any of Examples 23-29, comprising: determining, at a second time, that the second link does not meet the set of QoS requirements; and waiting a threshold number of intervals before testing the second link again to determine whether the second link meets the set of QoS requirements.

In Example 31, the subject matter of any of Examples 23-30, comprising recording an indication that more testing is needed to determine whether the second link meets the set of QoS requirements based on an event.

In Example 32, the subject matter of Example 31, wherein the event is a period of inactivity on the second link.

In Example 33, the subject matter of Example 32, wherein the period of inactivity has a length beyond a maximum idle threshold.

In Example 34, the subject matter of any of Examples 31-33, wherein the event is a violation of a member of the set of QoS requirements with respect to the second portion of the traffic flow.

In Example 35, the subject matter of any of Examples 31-34, comprising ceasing use of the second link based on the event.

In Example 36, the subject matter of any of Examples 23-35, wherein determining that the second link meets the set of QoS requirements includes obtaining telemetry over a fixed time period, the telemetry being directly measured from responses to packets copied onto the second link.

In Example 37, the subject matter of any of Examples 23-36, wherein determining that the second link meets the set of QoS requirements includes estimating telemetry from a subset of responses to packets copied onto the second link.

In Example 38, the subject matter of any of Examples 23-37, wherein the set of QoS requirements include a first class of QoS requirements and a second class of QoS requirements, the first class of QoS requirements and the second class of QoS requirements having a same type of QoS requirement and different values for the same type of QoS requirement.

In Example 39, the subject matter of Example 38, comprising assigning a first intra-class priority to the traffic flow and a second intra-class priority to a second traffic flow, wherein the traffic flow and the second traffic flow are in the first class of QoS requirements, the first intra-class priority having a higher priority than the second intra-class priority.

In Example 40, the subject matter of Example 39, wherein the second traffic flow is assigned the second intra-class priority based on a greater packet rate than the traffic flow.

In Example 41, the subject matter of any of Examples 39-40, wherein the second traffic flow is assigned the second intra-class priority based on an inferior signal quality than the traffic flow.

In Example 42, the subject matter of any of Examples 39-41, wherein the second traffic flow is assigned the second intra-class priority based on a longer session time than the traffic flow.

In Example 43, the subject matter of any of Examples 39-42, wherein the second traffic flow is assigned the second intra-class priority based on consuming a greater number of resources than the traffic flow.

In Example 44, the subject matter of any of Examples 39-43, wherein a total number of intra-class priorities across a total number of QoS classes is based on total traffic flow across QoS classes.

Example 45 is at least one machine-readable medium including instructions for quality-of-service (QoS) network flow control, the instructions, when executed by processing circuitry, cause the processing circuitry to perform operations comprising: passing a traffic flow over a first link, the first link meeting a set of QoS requirements; detecting an availability of a second link; determining that the second link meets the set of QoS requirements, including: copying a first portion of the traffic flow to create a testing flow; sending the testing flow over the second link; and receiving a response to the testing flow over the second link; and using the second link to pass a second portion of the traffic flow based on the second link meeting the set of QoS requirements.

In Example 46, the subject matter of Example 45, wherein receiving the response to the testing flow over the second link includes measuring telemetry of the testing flow based on the response to determine that the second link meets the set of QoS requirements.

In Example 47, the subject matter of any of Examples 45-46, wherein the response to the testing flow received over the second link is in-band for the second link.

In Example 48, the subject matter of any of Examples 45-47, wherein a packet in the testing flow is given a lowest priority provided by the second link to mitigate congestion at an endpoint of the second link.

In Example 49, the subject matter of Example 48, wherein the lowest priority is indicated in an Internet Protocol header of the packet.

In Example 50, the subject matter of any of Examples 45-49, wherein the set of QoS requirements include a packet loss threshold.

In Example 51, the subject matter of any of Examples 45-50, wherein the set of QoS requirements include a packet latency threshold.

In Example 52, the subject matter of any of Examples 45-51, wherein the operations comprise: determining, at a second time, that the second link does not meet the set of QoS requirements; and waiting a threshold number of intervals before testing the second link again to determine whether the second link meets the set of QoS requirements.

In Example 53, the subject matter of any of Examples 45-52, wherein the operations comprise recording an indication that more testing is needed to determine whether the second link meets the set of QoS requirements based on an event.

In Example 54, the subject matter of Example 53, wherein the event is a period of inactivity on the second link.

In Example 55, the subject matter of Example 54, wherein the period of inactivity has a length beyond a maximum idle threshold.

In Example 56, the subject matter of any of Examples 53-55, wherein the event is a violation of a member of the set of QoS requirements with respect to the second portion of the traffic flow.

In Example 57, the subject matter of any of Examples 53-56, wherein the operations comprise ceasing use of the second link based on the event.

In Example 58, the subject matter of any of Examples 45-57, wherein determining that the second link meets the set of QoS requirements includes obtaining telemetry over a fixed time period, the telemetry being directly measured from responses to packets copied onto the second link.

In Example 59, the subject matter of any of Examples 45-58, wherein determining that the second link meets the set of QoS requirements includes estimating telemetry from a subset of responses to packets copied onto the second link.

In Example 60, the subject matter of any of Examples 45-59, wherein the set of QoS requirements include a first class of QoS requirements and a second class of QoS requirements, the first class of QoS requirements and the second class of QoS requirements having a same type of QoS requirement and different values for the same type of QoS requirement.

In Example 61, the subject matter of Example 60, wherein the operations comprise assigning a first intra-class priority to the traffic flow and a second intra-class priority to a second traffic flow, wherein the traffic flow and the second traffic flow are in the first class of QoS requirements, the first intra-class priority having a higher priority than the second intra-class priority.

In Example 62, the subject matter of Example 61, wherein the second traffic flow is assigned the second intra-class priority based on a greater packet rate than the traffic flow.

In Example 63, the subject matter of any of Examples 61-62, wherein the second traffic flow is assigned the second intra-class priority based on an inferior signal quality than the traffic flow.

In Example 64, the subject matter of any of Examples 61-63, wherein the second traffic flow is assigned the second intra-class priority based on a longer session time than the traffic flow.

In Example 65, the subject matter of any of Examples 61-64, wherein the second traffic flow is assigned the second intra-class priority based on consuming a greater number of resources than the traffic flow.

In Example 66, the subject matter of any of Examples 61-65, wherein a total number of intra-class priorities across a total number of QoS classes is based on total traffic flow across QoS classes.

Example 67 is a system for quality-of-service (QoS) network flow control, the system comprising: means for passing a traffic flow over a first link, the first link meeting a set of QoS requirements; detecting an availability of a second link to the system; determining that the second link meets the set of QoS requirements, including: copying a first portion of the traffic flow to create a testing flow; sending the testing flow over the second link; receiving a response to the testing flow over the second link, the response being in-band for the second link; and measuring telemetry of the testing flow based on the response to determine that the second link meets the set of QoS requirements; and using the second link to pass a second portion of the traffic flow based on the second link meeting the set of QoS requirements.

In Example 68, the subject matter of Example 67, wherein a packet in the testing flow is given a lowest priority provided by the second link to mitigate congestion at an endpoint of the second link.

In Example 69, the subject matter of Example 68, wherein the lowest priority is indicated in an Internet Protocol header of the packet.

In Example 70, the subject matter of any of Examples 67-69, wherein the set of QoS requirements include a packet loss threshold.

In Example 71, the subject matter of any of Examples 67-70, wherein the set of QoS requirements include a packet latency threshold.

In Example 72, the subject matter of any of Examples 67-71, comprising: means for determining, at a second time, that the second link does not meet the set of QoS requirements; and means for waiting a threshold number of intervals before testing the second link again to determine whether the second link meets the set of QoS requirements.

In Example 73, the subject matter of any of Examples 67-72, comprising means for recording an indication that more testing is needed to determine whether the second link meets the set of QoS requirements based on an event.

In Example 74, the subject matter of Example 73, wherein the event is a period of inactivity on the second link.

In Example 75, the subject matter of Example 74, wherein the period of inactivity has a length beyond a maximum idle threshold.

In Example 76, the subject matter of any of Examples 73-75, wherein the event is a violation of a member of the set of QoS requirements with respect to the second portion of the traffic flow.

In Example 77, the subject matter of any of Examples 73-76, comprising means for ceasing use of the second link based on the event.

In Example 78, the subject matter of any of Examples 67-77, wherein the means for determining that the second link meets the set of QoS requirements include means for obtaining telemetry over a fixed time period, the telemetry being directly measured from responses to packets copied onto the second link.

In Example 79, the subject matter of any of Examples 67-78, wherein the means for determining that the second link meets the set of QoS requirements include means for estimating telemetry from a subset of responses to packets copied onto the second link.

In Example 80, the subject matter of any of Examples 67-79, wherein the set of QoS requirements include a first class of QoS requirements and a second class of QoS requirements, the first class of QoS requirements and the second class of QoS requirements having a same type of QoS requirement and different values for the same type of QoS requirement.

In Example 81, the subject matter of Example 80, comprising means for assigning a first intra-class priority to the traffic flow and a second intra-class priority to a second traffic flow, wherein the traffic flow and the second traffic flow are in the first class of QoS requirements, the first intra-class priority having a higher priority than the second intra-class priority.

In Example 82, the subject matter of Example 81, wherein the second traffic flow is assigned the second intra-class priority based on a greater packet rate than the traffic flow.

In Example 83, the subject matter of any of Examples 81-82, wherein the second traffic flow is assigned the second intra-class priority based on an inferior signal quality than the traffic flow.

In Example 84, the subject matter of any of Examples 81-83, wherein the second traffic flow is assigned the second intra-class priority based on a longer session time than the traffic flow.

In Example 85, the subject matter of any of Examples 81-84, wherein the second traffic flow is assigned the second intra-class priority based on consuming a greater number of resources than the traffic flow.

In Example 86, the subject matter of any of Examples 81-85, wherein a total number of intra-class priorities across a total number of QoS classes is based on total traffic flow across QoS classes.

Example 87 is at least one machine-readable medium including instructions that, when executed by processing circuitry, cause the processing circuitry to perform operations to implement of any of Examples 1-86.

Example 88 is an apparatus comprising means to implement of any of Examples 1-86.

Example 89 is a system to implement of any of Examples 1-86.

Example 90 is a method to implement of any of Examples 1-86.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

## Claims

1. A method for quality-of-service (QoS) network flow control, the method comprising:
passing, by a network device, a traffic flow over a first link, the first link meeting a set of QoS requirements;
detecting an availability of a second link to the network device;
determining, by the network device, that the second link meets the set of QoS requirements, including:
copying a first portion of the traffic flow to create a testing flow;
sending the testing flow over the second link; and
receiving a response to the testing flow over the second link; and
using, by the network device, the second link to pass a second portion of the traffic flow based on the second link meeting the set of QoS requirements.

2. The method of claim 1, wherein receiving the response to the testing flow over the second link includes measuring telemetry of the testing flow based on the response to determine that the second link meets the set of QoS requirements.

3. The method of any of claims 1-2, wherein the response to the testing flow received over the second link is in-band for the second link.

4. The method of any of claims 1-3, wherein a packet in the testing flow is given a lowest priority provided by the second link to mitigate congestion at an endpoint of the second link.

5. The method of any of claims 1-4, comprising:
determining, at a second time, that the second link does not meet the set of QoS requirements; and
waiting a threshold number of intervals before testing the second link again to determine whether the second link meets the set of QoS requirements.

6. The method of any of claims 1-5, comprising recording an indication that more testing is needed to determine whether the second link meets the set of QoS requirements based on an event.

7. The method of claim 6, wherein the event is a period of inactivity on the second link.

8. The method of any of claims 1-7, wherein determining that the second link meets the set of QoS requirements includes obtaining telemetry over a fixed time period, the telemetry being directly measured from responses to packets copied onto the second link.

9. The method of any of claims 1-8, wherein determining that the second link meets the set of QoS requirements includes estimating telemetry from a subset of responses to packets copied onto the second link.

10. The method of any of claims 1-9, wherein the set of QoS requirements include a first class of QoS requirements and a second class of QoS requirements, the first class of QoS requirements and the second class of QoS requirements having a same type of QoS requirement and different values for the same type of QoS requirement.

11. The method of claim 10, comprising assigning a first intra-class priority to the traffic flow and a second intra-class priority to a second traffic flow, wherein the traffic flow and the second traffic flow are in the first class of QoS requirements, the first intra-class priority having a higher priority than the second intra-class priority.

12. The method of claim 11, wherein the second traffic flow is assigned the second intra-class priority based on a greater packet rate than the traffic flow.

13. The method of any of claims 11-12, wherein the second traffic flow is assigned the second intra-class priority based on an inferior signal quality than the traffic flow.

14. A system comprising means to perform a method of any of claims 1-13.

15. At least one machine-readable medium including instructions that, when executed by processing circuitry, cause the processing circuitry to perform a method of any of claims 1-13.
